# EUROPEAN PATENT SPECIFICATION

(11) **EP 4 012 513 B1**
(45) Date of publication and mention of the grant of the patent: **20.11.2024**
(21) Application number: 20212820.3
(22) Date of filing: 09.12.2020
(51) Int. Cl.: G05B 15/02, G05B 19/042

(54) **A FACILITY SYSTEM FOR AUTOMATION OF A BUILDING**
ANLAGESYSTEM ZUR AUTOMATISIERUNG EINES GEBÄUDES
SYSTÈME D'INSTALLATION POUR L'AUTOMATISATION D'UN BÂTIMENT

(43) Date of publication of application: 15.06.2022
(73) Proprietor: ABB Schweiz AG, 5400 Baden (CH)
(72) Inventor: KANTZ, Florian, 64397 Modautal (DE); HAHN, Wolfgang, 77815 Bühl (DE)
(74) Representative: Maiwald GmbH

(56) References cited:
- EP-A2- 2 574 999
- US-A1- 2008 015 823
- US-A1- 2018 359 109

## Description

### Background

For planning and constructing a building the different subsystems are commonly planned and engineered independently:
- Architects are planning the building structure;
- Building planners or consultants are defining the functionalities inside the building;
- Electrical installers select and install devices for realizing the automation functionality;
- System integrators map functionality to the devices and configure the devices;
- Panel builders design infrastructure for electrical distribution and protection;
- IT experts define and implement communication infrastructure.

Further experts may be involved for additional tasks like electrical vehicle (EV) charging infrastructure or renewables integration.

In general, all these activities are performed independently and information collected before has to be entered again.

Document EP 2 574 999 A2 relates to building automation systems, and to user interfaces for building automation systems that allow for monitoring and control of building automation system devices.

### Description

Within the field of building automation some automation is combined, as e.g. electrical installation like lights or blinds with HVAC (heating, ventilation, air conditioning). Beside the independent planning and engineering of these areas within the building, especially there is no connection between automation and non-automation domains resulting in independent planning of these domains.

Aspects of the present invention are related to a facility system for automation of a building, use of the facility system and a method for automation of a building with subject matter as described in the independent claims.

Advantageous modifications of the invention are stated in the dependent claims. All combinations of at least two of the features disclosed in the description, the claims and the figures fall within the scope of the invention. In order to avoid repetition, features disclosed in accordance with the method shall also apply and be claimable in accordance with mentioned systems.

Some features are provided with counting words to improve readability or to make the assignment more clear, but this does not imply the presence of certain features.

To achieve these and other advantages and in accordance with the purpose of the invention, as embodied and broadly described herein, there is provided a facility system as defined in claim 1.

The input interface of the facility system can be configured to receive automation and/or infrastructure related data. The virtual structure of an architectural representation of at least one building is a building in the meaning of the physical building, which is described using a virtual structure.

The facility system provides support for planning and automation of the building based on a common data exchange platform over the whole life cycle of a building describing automation devices as well as non-automation devices, like electrical infrastructure. Each device and/or actor of a system can access the data of the modules and extend this data enabling re-use of collected and generated data as well as extending the knowledge base of the overall building. The term data includes the data itself as well as information which is gathered by using the data and combining the data.

Advantageously effort and complexity for device integration and/or technology integration and/or system integration is reduced by using the data exchange platform of the facility system. Because of such a common data exchange platform a reuse of existing information of the modules created by other systems and/or devices is possible.

The facility system supports a planning and/or an engineering phase of the building by enabling to handle different configurators used for different devices and/or subsystems and by enabling to re-use information already available within the facility system to increase efficiency supported by the interaction via the common data exchange platform, which provides access to a complete representation of the building. In addition, the facility system supports the commissioning of the building, by transferring the representation of the building over network or via tooling to devices in the physical building for system configuration.

For instance, the facility system can be used for a cross-domain integration of devices for the building with a workflow as for instance:
1) An architect designs a structure of the building and stores this information within the structure module based on a virtual structure.
2) The planning consultant retrieves the structure of the building from the facility system and defines an automation functionality for each area of the building. The functionality can be stored within the automation functionality module and can be linked to the virtual structure of the building.
3) A system integrator retrieves the virtual structure of the building and the functionality by accessing the facility system, selects corresponding devices to realise the functionality and defines a location for installation of the devices. The devices are stored as virtual devices within the device module of the facility system, associated with the already defined functionality, and linked to the virtual structure of the building.
4) A panel builder accesses the facility system and retrieves the virtual structure of the building, the functionality and the virtual devices. Based on this information, the electrical power distribution and electric power protection is designed. The panel builder can store the electrical power distribution and electrical power protection devices as well as related details within the modules of the facility system, e.g. including a fully designed distribution panel, which can be linked to the virtual structure of the building.
5) A system integrator can access the facility system to retrieve all available information to generate a documentation on the automation of the building.

As explained in detail below, this workflow can be extended for example to support further domains, like electric vehicle charging or renewable power generation, as for instance solar panels, which makes planning of electrical power distribution and electrical power protection even more relevant. As a further example, the workflow and the facility system can be extended by a planning of the IT/communication infrastructure integrating also the building automation networks.

During the life cycle of the building using the facility system as described, it is possible
- for commissioning, to extract required information for device configuration;
- for operation, to collect live data enriched with semantic functionality information to enable value-adding services;
- for maintenance, to support localization and resolution of issues.

Using other words the facility system enables to integrate and provide information in respect to the building for efficient data exchange. It can enable workflow for planning of building automation with electrical distribution and connection. The modular extendable structure of the modules of the facility system is open for integration of further domains, e.g. EV charging and/or power generation. Beneficially, the facility system enables a reuse of already engineered information, e.g. a planned virtual structure of the building and related functionality for calculations.

The facility system can increase an efficiency for integration of (sub-) systems due to a common data exchange platform for a plurality of domains versus multiple specific interfaces. In addition, the facility system enables a more efficient data storage and communication.

For a supplier of automation systems for buildings it is beneficial that using the facility system enables to combine automation and electrical distribution and/or protection experience as well as the opportunity to provide a service of automatic planning of distribution cabinets and/or panels.

According to an aspect, the structure module is configured to provide the modular extendable virtual structure based on a common graph database to provide the virtual structure; and the automation functionality module is configured to provide the modular extendable functionalities based on the common graph database; and
the device module is configured to be extendable based on the common graph database.

According to an aspect, the structure module and/or the automation functionality module and/or the device module is/are configured to be modular extendable by each accepting extensions of the respective module and the facility system requiring the linking of the respective modules to the structure module and/or the association of the respective modules to the automation functionality module if access to a respective extension is requested.

An access to the respective module, including the extension, can be requested by a system and/or a user of the facility system.

According to the invention, the facility system includes a model control unit, which is configured to verify an extension of the modules based on the received data from the input interface to correspond to a modular extendable information model of the facility system.

Such an information model can correspond to a structure of the facility system linking virtual structure of the building to automation functionalities and virtual devices as well as associating the automation functionalities to the virtual devices.

According to an aspect, the model control unit is configured to extend the related modules according to the received data from the input interface.

Using the information model for a modular extension of the modules of the facility system enables a coexistence of different technologies of devices and/or a common concept for technology representation with configurable and extensible mapping on an abstract level and/or enables an easy access for service providers to the different devices.

According to the invention, the model control unit is configured to verify an extension of the modules by confirming an existence of the respective link and/or association between the modules if access to the respective extension is requested.

Verification of an extensions of the modules can be a verification of data defining the extensions of the modules. The required verification only in case access to the respective extension is requested enables to set up the facility system step-by-step by different users according to specific needs at a specific stage and/or construction phase of the building, without annoying requests from the facility system to a user.

According to an aspect, the facility system is configured to generate a warning if the respective link and/or association between the modules cannot be verified if access to the respective extension as requested.

According to the invention, the automation functionality module is configured to spatial link the virtual structure of the building with the associated functionality of physical devices based on location identifiers of the virtual structure of the architectural representation of the at least one building associated with the physical devices.

Such a structural element like the location identifier enables an easy data management of the facility system.

According to an aspect, at least one of the physical devices is a controllable device for device automation and/or a device with operative function.

Operative functions are functions utilised for the operation of the building, as for instance sensing functions like brightness and/or temperature sensors as well as passive functions like energy metering or electrical protection using MCBs or power conversion functions like transformers as well as a controllable function like lighting and/or shading.

According to an aspect, the data exchange platform is configured to exchange data with a communication system of the building. Such a data exchange with the communication system of the building enable to link the virtual facility system to the real building for different purpose.

According to an aspect, the facility system includes an output interface, configured to provide a requested data of at least one of the modules; and wherein the data is requested via the input interface.

The facility system can provide a data exchange platform for a building to provide a plurality of relevant information about a building. This information is not limited to a specific scope like automation functionality but can be enriched by each user of the facility system. Based on this, a common integrated workflow can be realized in which users collaborate, based on the facility system, by accessing available information created by other users, perform steps on a workflow generating additional information and storing the information back to the facility system, to enable other users accessing it. Providing different abstraction mechanisms by the structure of the facility system and/or the information model opens this collaboration between different trades and domains.

According to an aspect, the facility system includes a configuration module configured to compile a plurality of the configuration data of the physical devices of the building by analysing the other modules of the facility system for uploading the configuration data to the physical building for configuration of the corresponding plurality of physical devices.

This configuration module enables to upload the complete configuration data necessary for configuring all or at least a plurality of the physical devices of the building within one configuration procedure.

According to an aspect, the facility system includes an electrical power distribution module and/or an electrical power protection module, configured to provide specification data and configuration data of related virtual devices with operative function corresponding to the related devices with operative function of the building associated to the functionality module and linked to the structure module.

That means the electrical power distribution module refers to related devices in respect to electrical power distribution and the electrical power protection module refers to related devices in respect to electrical power protection.

To enable this aspect the functionality module can be extended to include an electrical power distribution functionality and/or an electrical power protection functionality.

According to this aspect, the electrical power protection of the building can be created using the knowledge about electrical consumers and virtual structure of the building using the information model created by users in a previous step of building planning, e.g. functional planning, for selecting and adding devices for the user automatically. This can increase the business value by using the facility system to support the complete chain from light switch and/or socket via circuit breakers (MCB) to enclosure and/or to enable other suppliers to enrich user experience by adding additional domains like door entry systems (DES), electrical vehicle charging or solar energy systems.

According to an aspect, the facility system includes an electric vehicle charging module and/or renewable power generation module, each configured to provide specification data and configuration data of related virtual devices with operative function corresponding to the related devices with operative function of the building, wherein the virtual devices are respectively linked to the functionality module and/or associated to the structure module.

That means the electric vehicle charging module refers to related devices in respect to charging electrical vehicles and the renewable power generation module refers to related devices in respect to generation of renewable power. To enable this aspect the functionality module can be extended to represent an electrical vehicle charging functionality and/or a renewable power generation functionality.

According to an aspect the facility system includes a computer system with a computer program providing instructions, wherein the instructions, when executed by the computer program, cause the computer system to at least partially provide the functionality of the facility system.

Using other words, the facility system is at least partially provided by instructions of a computer program, which can be implemented on a computer system to constitute the facility system according to one of the preceding claims.

A use of the facility system as described above is proposed for architectural and/or functional planning of a physical building and/or for commissioning of the physical building and/or for operation of the physical building and/or for maintenance of the physical building and/or for verification of a plurality of extensions of the modules.

Verification of a plurality of extensions of the modules can be a verification of data defining the plurality of extensions of the modules. This verification can be performed before the compiled plurality of the configuration data of the physical devices of the building is uploaded to the physical building for configuration of the corresponding plurality of physical devices to validate Correct functionality of the physical devices after upload.

That means, the facility system can at least partially be provided by programming instructions implemented on a computer system.

A use of the facility system as described above for configuring a plurality of physical devices of the physical building is proposed.

A method for automation of a building is proposed, wherein in one step a facility system as described above is provided; and in another step, a plurality of configuration data of the facility system is uploaded to the physical building for configuration of the corresponding plurality of physical devices.

According to an aspect of the method for automation of the building, a further step provides data related to the modules of the facility system via an input interface of the facility system for extending at least one of the extendable modules.

### Brief description of the drawings

The accompanying drawings, which are included to provide a further understanding of the invention and are incorporated in and constitute a part of this application, illustrate embodiments of the invention and together with the description serve to explain the principle of the invention. The drawings display in:
- Figure 1: a system architecture including dataflow between a facility system and a building;
- Figure 2: a schematic drawing of a structure module, a automation functionality module and a device module including associations and links.

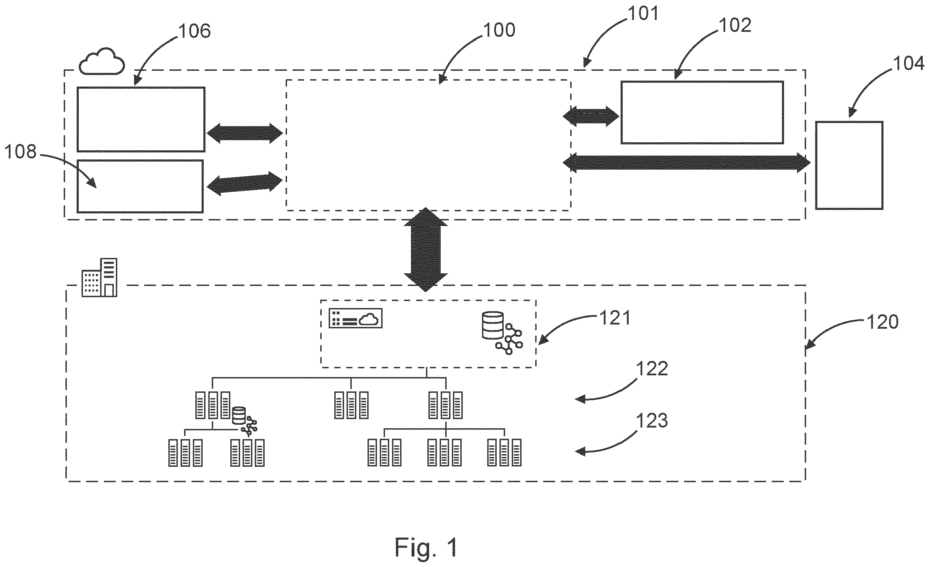

Figure 1 sketches schematically a system architecture of the facility system 100 for automation of the building 120 and the building 120 including dataflow between the facility system 100 and the building 120. The building 120 comprises an edge gateway 121 for receiving configuration data according to the information model. The received configuration data via the edge gateway 121 is distributed by a distribution layer 122 to a plurality of physical devices 123, which are communicatively coupled to the distribution layer 122.

The facility system 100 is linked to the physical building 122 exchange data with the communication system 121, 122, 123 of the building 120, comprising at least the edge gateway 121, the distribution layer 122 and the plurality of physical devices 123. The facility system 100 is configured to exchange data with analytical services 102 provided by a supplier and/or by other third parties 104. The facility system 100 is configured to be modular extendable with virtual devices 108 and to receive the device related specification and configuration data 106. The facility system 100 and/or the analytical services 102 and/or the configuration data 106 and/or the virtual devices 108 can be provided by a cloud 101, i.e. a multitude of servers, which are linked together.

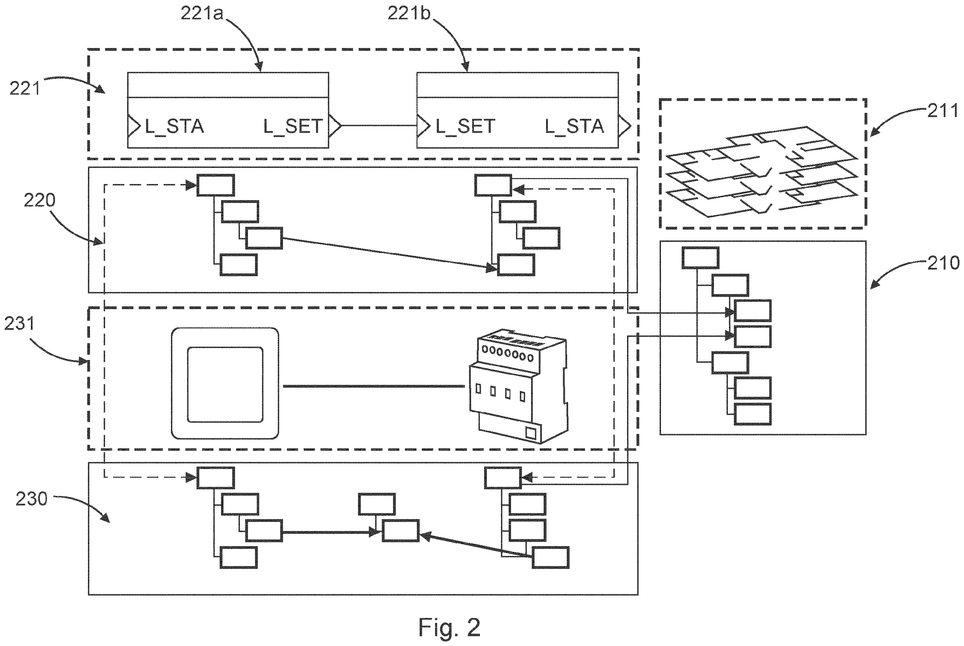

Figure 2 sketches schematically a structure module 210, an automation functionality module 220 and a device module 230 including data communication connection lines indicating associations and links. Additionally a physical building 211, functional description 221 of the devices and physical devices 231. The shown rectangles of the individual modules are linked together by lines to indicate the internal structure and the errors between the rectangles between the individual modules represent the linking and the association of the modules.

## Claims

1. A facility system (100) for automation of a building (120, 211), comprising:
a structure module (210), configured to provide a modular extendable virtual structure of an architectural representation of at least one building (120);
an automation functionality module (220), configured to provide modular extendable functionalities associated with physical devices (231) spatial linked, based on location identifiers of the virtual structure of the architectural representation of the at least one building with the virtual structure of the at least one building (120, 211);
an extendable device module (230), configured to provide specification and configuration data of virtual devices corresponding to the physical devices (231) of the at least one building (120, 211) associated to the functionality module (220) and spatial linked to the structure module (210);
an input interface, configured to receive data related to at least one of the modules (210, 220, 230) of the facility system (100);
a data exchange platform, configured to link the modules (210, 220, 230) of the facility system (100) and the input interface; and
a model control unit, configured to verify an extension of the modules (210, 220, 230) based on the received data from the input interface to correspond to a modular extendable information model of the facility system (100),
wherein the model control unit is configured to verify an extension of the modules (210, 220, 230) by confirming an existence of a link and/or association between the modules (210, 220, 230) of the facility system (100), if access to the extension of the modules (210, 220, 230) is requested.

2. The facility system (100) according to claim 1,
wherein the structure module (210) and/or the automation functionality module (220) and/or the device module (230) is/are configured to be modular extendable by each accepting extensions of the respective module (210, 220, 230) and the facility system (100) requiring the linking of the automation functionality module (220) and/or the device module (230) to the structure module (210) and/or the association of the structure module (210) and/or the device module (230) to the automation functionality module (220) if access to a respective extension is requested.

3. The facility system (100) according to one of the preceding claims,
wherein at least one of the physical devices (231) is a controllable device for device automation and/or a device with operative function.

4. The facility system (100) according to one of the preceding claims,
wherein the data exchange platform is configured to exchange data with a communication system (121) of the building (120, 211).

5. The facility system (100) according to one of the preceding claims,
comprising an output interface, configured to provide a requested data of at least one of the modules (210, 220, 230); and wherein the data is requested via the input interface.

6. The facility system (100) according to one of the preceding claims,
comprising a configuration module configured to compile a plurality of the configuration data of the physical devices (231) of the at least one building (120, 211) by analysing the other modules of the facility system (100) for uploading the configuration data to the at least one building (120, 211) for configuration of the corresponding plurality of physical devices (231).

7. The facility system (100) according to one of the preceding claims,
comprising an electrical power distribution module and/or an electrical power protection module, configured to provide specification data and configuration data of related virtual devices with operative function corresponding to the related devices with operative function of the at least one building (120, 211) associated to the functionality module (220) and linked to the structure module (210).

8. The facility system (100) according to one of the preceding claims,
comprising an electric vehicle charging module and/or renewable power generation module, each configured to provide specification data and configuration data of related virtual devices with operative function corresponding to the related devices with operative function of the at least one building (120, 211),
wherein the virtual devices are respectively linked to the functionality module (220) and/or associated to the structure module (210).

9. A computer program with instructions, wherein the instructions, when executed by a computer system that is part of a facility system (100) according to one of the preceding claims, cause the computer system to provide the functionality of the facility system (100).

10. Use of the facility system (100) according to one of the claims 1-8 for architectural planning of a building (120, 211) and/or for commissioning of the building (120, 211) and/or for operation of the building (120, 211) and/or for maintenance of the building (120, 211) and/or for verification of a plurality of extensions of the modules (210, 220, 230).

11. Use of the facility system (100) according to one of claims 1 to 8 for configuring a plurality of physical devices (231) of the at least one building (120, 211)

12. A method for automation of a building (120, 211), comprising providing a facility system (100) according to one of claims 1 to 8; and uploading a plurality of configuration data of the facility system (100) to the Z at least one building (120, 211) for configuration of the corresponding plurality of physical devices (231).

13. The method according to claim 12, comprising providing data related to the modules (210, 220, 230) of the facility system (100) via an input interface of the facility system (100) for extending at least one of the extendable modules (210, 220, 230).

## Patentansprüche

1. Einrichtungssystem (100) zur Automatisierung eines Gebäudes (120, 211), welches umfasst:
ein Strukturmodul (210), das dazu eingerichtet ist, eine modulare, erweiterbare virtuelle Struktur einer architektonischen Darstellung von mindestens einem Gebäude (120) bereitzustellen;
ein Automatisierungsfunktionsmodul (220), das dazu eingerichtet ist, modulare, erweiterbare Funktionalitäten bereitzustellen, die mit physischen Geräten (231) verbunden sind, die auf der Grundlage von Ortskennungen der virtuellen Struktur der architektonischen Darstellung des mindestens einen Gebäudes mit der virtuellen Struktur des mindestens einen Gebäudes (120, 211) räumlich verbunden sind;
ein erweiterbares Gerätemodul (230), das dazu eingerichtet ist, Spezifikations- und Konfigurationsdaten virtueller Geräte bereitzustellen, die den physischen Geräten (231) des mindestens einen Gebäudes (120, 211) entsprechen, das dem Funktionsmodul (220) zugeordnet und das räumlich mit dem Strukturmodul (210) verbunden ist;
eine Eingabeschnittstelle, die dazu eingerichtet ist, Daten in Bezug auf mindestens eines der Module (210, 220, 230) des Einrichtungssystems (100) zu empfangen;
eine Datenaustauschplattform, die dazu eingerichtet ist, die Module (210, 220, 230) des Einrichtungssystems (100) und die Eingabeschnittstelle zu verbinden; und
eine Modellsteuerungseinheit, die dazu eingerichtet ist, dass sie eine Erweiterung der Module (210, 220, 230) auf der Grundlage der von der Eingabeschnittstelle empfangenen Daten verifiziert, um einem modular erweiterbaren Informationsmodell des Einrichtungssystems (100) zu entsprechen,
wobei die Modellsteuerungseinheit dazu eingerichtet ist, eine Erweiterung der Module (210, 220, 230) zu verifizieren, indem sie das Vorhandensein einer Verbindung und/oder Zuordnung zwischen den Modulen (210, 220, 230) des Einrichtungssystems (100) bestätigt, wenn ein Zugriff auf die Erweiterung der Module (210, 220, 230) angefordert wird.

2. Einrichtungssystem (100) nach Anspruch 1,
wobei das Strukturmodul (210) und/oder das Automatisierungsfunktionsmodul (220) und/oder das Gerätemodul (230) dazu eingerichtet ist/sind, modular erweiterbar zu sein, indem es/sie jeweils Erweiterungen des jeweiligen Moduls (210, 220, 230) annimmt/annehmen und das Anlagensystem (100) die Verknüpfung des Automatisierungsfunktionsmoduls (220) und/oder des Gerätemoduls (230) mit dem Strukturmodul (210) und/oder die Zuordnung des Strukturmoduls (210) und/oder des Gerätemoduls (230) zu dem Automatisierungsfunktionsmodul (220) erfordert, wenn ein Zugriff auf eine jeweilige Erweiterung angefordert wird.

3. Einrichtungssystem (100) nach einem der vorhergehenden Ansprüche,
wobei mindestens eines der physikalischen Geräte (231) ein steuerbares Gerät zur Geräteautomatisierung und/oder ein Gerät mit Betriebsfunktion ist.

4. Einrichtungssystem (100) nach einem der vorhergehenden Ansprüche,
wobei die Datenaustauschplattform für den Datenaustausch mit einem Kommunikationssystem (121) des Gebäudes (120, 211) eingerichtet ist.

5. Einrichtungssystem (100) nach einem der vorhergehenden Ansprüche,
aufweisend eine Ausgabeschnittstelle, die dazu eingerichtet ist, dass angeforderte Daten von mindestens einem der Module (210, 220, 230) bereitzustellen; und
wobei die Daten über die Eingabeschnittstelle angefordert werden.

6. Einrichtungssystem (100) nach einem der vorhergehenden Ansprüche,
umfassend ein Konfigurationsmodul, das dazu eingerichtet ist, eine Vielzahl der Konfigurationsdaten der physikalischen Vorrichtungen (231) des mindestens einen Gebäudes (120, 211) durch Analysieren der anderen Module des Einrichtungssystems (100) zusammenzustellen, um die Konfigurationsdaten in das mindestens eine Gebäude (120, 211) zur Konfiguration der entsprechenden Vielzahl von physikalischen Vorrichtungen (231) hochzuladen.

7. Einrichtungssystem (100) nach einem der vorhergehenden Ansprüche,
umfassend ein Modul zur Verteilung elektrischer Energie und/oder ein Modul zum Schutz elektrischer Energie, das dazu eingerichtet ist, Spezifikationsdaten und Konfigurationsdaten zugehöriger virtueller Vorrichtungen mit Betriebsfunktionen bereitzustellen, die den zugehörigen Vorrichtungen mit Betriebsfunktionen des mindestens einen Gebäudes (120, 211) entsprechen, das dem Funktionalitätsmodul (220) zugeordnet und mit dem Strukturmodul (210) verbunden ist.

8. Einrichtungssystem (100) nach einem der vorhergehenden Ansprüche,
aufweisend ein Modul zum Laden von Elektrofahrzeugen und/oder ein Modul zur Erzeugung von Strom aus erneuerbaren Energien, die jeweils dazu eingerichtet sind, Spezifikationsdaten und Konfigurationsdaten zugehöriger virtueller Geräte mit Betriebsfunktion bereitzustellen, die den zugehörigen Geräten mit Betriebsfunktion des mindestens einen Gebäudes (120, 211) entsprechen,
wobei die virtuellen Geräte jeweils mit dem Funktionsmodul (220) verknüpft und/oder dem Strukturmodul (210) zugeordnet sind.

9. Computerprogramm mit Anweisungen, wobei die Anweisungen, wenn sie von einem Computersystem ausgeführt werden, das Teil eines Einrichtungssystems (100) nach einem der vorhergehenden Ansprüche ist, das Computersystem veranlassen, die Funktionalität des Einrichtungssystems (100) bereitzustellen.

10. Verwendung des Anlagensystems (100) nach einem der Ansprüche 1 - 8 für eine architektonische Planung eines Gebäudes (120, 211) und/oder für eine Inbetriebnahme des Gebäudes (120, 211) und/oder für einen Betrieb des Gebäudes (120, 211) und/oder für eine Wartung des Gebäudes (120, 211) und/oder für eine Überprüfung einer Vielzahl von Erweiterungen der Module (210, 220, 230).

11. Verwendung des Einrichtungssystems (100) nach einem der Ansprüche 1 bis 8 zum Konfigurieren einer Vielzahl von physikalischen Geräten (231) des mindestens einen Gebäudes (120, 211).

12. Verfahren zur Automatisierung eines Gebäudes (120, 211), aufweisend eine Bereitstellung eines Gebäudesystems (100) nach einem der Ansprüche 1 bis 8; und
Hochladen einer Vielzahl von Konfigurationsdaten des Einrichtungssystems (100) in das mindestens eine Gebäude (120, 211) zur Konfiguration der entsprechenden Vielzahl von physischen Geräten (231).

13. Verfahren nach Anspruch 12, umfassend ein Bereitstellen von Daten, die sich auf die Module (210, 220, 230) des Einrichtungssystems (100) beziehen, über eine Eingabeschnittstelle des Einrichtungssystems (100) zum Erweitern mindestens eines der erweiterbaren Module (210, 220, 230).

## Revendications

1. Système d'installation (100) pour automatisation d'un bâtiment (120, 211), comprenant :
un module de structure (210), configuré pour fournir une structure virtuelle extensible modulaire d'une représentation architecturale d'au moins un bâtiment (120) ;
un module de fonctionnalité d'automatisation (220), configuré pour fournir des fonctionnalités extensibles modulaires associées à des dispositifs physiques (231) liés spatialement, sur la base d'identifiants d'emplacement de la structure virtuelle de la représentation architecturale de l'au moins un bâtiment avec la structure virtuelle de l'au moins un bâtiment (120, 211) ;
un module de dispositif extensible (230), configuré pour fournir des données de spécification et de configuration de dispositifs virtuels correspondant aux dispositifs physiques (231) de l'au moins un bâtiment (120, 211) associé au module de fonctionnalité (220) et lié spatialement au module de structure (210) ;
une interface d'entrée, configurée pour recevoir des données connexes à au moins un des modules (210, 220, 230) du système d'installation (100) ;
une plate-forme d'échange de données, configurée pour lier les modules (210, 220, 230) du système d'installation (100) et l'interface d'entrée ; et
une unité de commande de modèle, configurée pour vérifier une extension des modules (210, 220, 230) sur la base des données reçues provenant de l'interface d'entrée pour correspondre à un modèle d'informations extensible modulaire du système d'installation (100),
dans lequel l'unité de commande de modèle est configurée pour vérifier une extension des modules (210, 220, 230) en confirmant une existence d'un lien et/ou d'une association entre les modules (210, 220, 230) du système d'installation (100), si un accès à l'extension des modules (210, 220, 230) est demandé.

2. Système d'installation (100) selon la revendication 1,
dans lequel le module de structure (210) et/ou le module de fonctionnalité d'automatisation (220) et/ou le module de dispositif (230) est/sont configuré(s) pour être extensible(s) de façon modulaire en acceptant chacun des extensions du module respectif (210, 220, 230) et en requérant, par le système d'installation (100), l'exécution de la liaison du module de fonctionnalité d'automatisation (220) et/ou du module de dispositif (230) au module de structure (210) et/ou l'association du module de structure (210) et/ou du module de dispositif (230) au module de fonctionnalité d'automatisation (220) si un accès à une extension respective est demandé.

3. Système d'installation (100) selon l'une des revendications précédentes,
dans lequel au moins un des dispositifs physiques (231) est un dispositif commandable pour automatisation de dispositif et/ou un dispositif avec fonction opérative.

4. Système d'installation (100) selon l'une des revendications précédentes,
dans lequel la plate-forme d'échange de données est configurée pour échange de données avec un système de communication (121) du bâtiment (120, 211).

5. Système d'installation (100) selon l'une des revendications précédentes,
comprenant une interface de sortie, configurée pour fournir des données demandées d'au moins un des modules (210, 220, 230) ; et dans lequel les données sont demandées par l'intermédiaire de l'interface d'entrée.

6. Système d'installation (100) selon l'une des revendications précédentes,
comprenant un module de configuration configuré pour compiler une pluralité des données de configuration des dispositifs physiques (231) de l'au moins un bâtiment (120, 211) en analysant les autres modules du système d'installation (100) pour télécharger les données de configuration vers l'au moins un bâtiment (120, 211) pour configuration de la pluralité correspondante de dispositifs physiques (231).

7. Système d'installation (100) selon l'une des revendications précédentes,
comprenant un module de distribution d'énergie électrique et/ou un module de protection d'énergie électrique, configuré pour fournir des données de spécification et des données de configuration de dispositifs virtuels connexes avec fonction opérative correspondant aux dispositifs connexes avec fonction opérative de l'au moins un bâtiment (120, 211) associé au module de fonctionnalité (220) et lié au module de structure (210) .

8. Système d'installation (100) selon l'une des revendications précédentes,
comprenant un module de recharge de véhicule électrique et/ou un module de génération d'énergie renouvelable, chacun configuré pour fournir des données de spécification et des données de configuration de dispositifs virtuels connexes avec fonction opérative correspondant aux dispositifs connexes avec fonction opérative de l'au moins un bâtiment (120, 211),
dans lequel les dispositifs virtuels sont respectivement liés au module de fonctionnalité (220) et/ou associés au module de structure (210).

9. Programme informatique avec des instructions, dans lequel les instructions, lorsqu'elles sont exécutées par un système informatique qui fait partie d'un système d'installation (100) selon l'une des revendications précédentes, amènent le système informatique à fournir la fonctionnalité du système d'installation (100).

10. Utilisation du système d'installation (100) selon l'une des revendications 1 à 8 pour planification architecturale d'un bâtiment (120, 211) et/ou pour mise en service du bâtiment (120, 211) et/ou pour fonctionnement du bâtiment (120, 211) et/ou pour entretien du bâtiment (120, 211) et/ou pour vérification d'une pluralité d'extensions des modules (210, 220, 230) .

11. Utilisation du système d'installation (100) selon l'une des revendications 1 à 8 pour configurer une pluralité de dispositifs physiques (231) de l'au moins un bâtiment (120, 211).

12. Procédé pour automatisation d'un bâtiment (120, 211), comprenant la fourniture d'un système d'installation (100) selon l'une des revendications 1 à 8 ; et
le téléchargement d'une pluralité de données de configuration du système d'installation (100) vers l'au moins un bâtiment (120, 211) pour configuration de la pluralité correspondante de dispositifs physiques (231).

13. Procédé selon la revendication 12, comprenant la fourniture de données connexes aux modules (210, 220, 230) du système d'installation (100) par l'intermédiaire d'une interface d'entrée du système d'installation (100) pour extension d'au moins un des modules extensibles (210, 220, 230).
